# EUROPEAN PATENT APPLICATION

(11) **EP 1 357 671 A2**
(43) Date of publication of application: **29.10.2003**
(21) Application number: 03252561.0
(22) Date of filing: 23.04.2003
(51) Int. Cl.: H04B 1/40, H01Q 1/24

(54) **Improved portable telecommunication terminal**

(30) Priority: 23.04.2002 GB 0209267
(71) Applicant: Hutchinson Whampoa Thre G IP (Bahamas) Limited, Nassau, New Providence (BS)
(72) Inventor: Efthymiou, Nektaria, Leatherhead, Surrey KT22 8LZ (GB); Hepsaydir, Erol, Maidenhead, Berkshire SL6 5JP (GB)
(74) Representative: Dawson, Elizabeth Ann

(57) **Abstract**

The present invention relates to the use of Dielectric Resonator Antenna (DRA) systems in portable telecommunication devices to enable communication to different networks to be carried out simultaneously. For example, target network signal quality checks can be made on a GSM network while communication in a UMTS network continues without the use of compress mode. Since DRAs can provide high isolation between frequencies, the measurements will be accurate, due to the reduction of the noise between the frequencies used by different networks. Dielectric Resonator Antennas are antennas with high radiation efficiency and are a good match to most commonly used transmission lines and they are small in size.

## Description

The present invention relates to portable telecommunication terminals with a plurality of transceiver chains for use in digital mobile communication networks.

### Background:

The current status of the telecommunications arena includes a number of different networks covering the same geographical area. For example, in Europe we will see during the next few years the co-existence of the Global System for Mobile communications (GSM) and the Universal Mobile Telecommunication System (UMTS) within the same geographical area. However, during the first years of the deployment of new networks, the coverage area of one network may be smaller than that of another network for mainly practical reasons, e.g. licences to build new sites. Moreover, even in later years, different networks will co-exist and it may appear necessary in some areas to share the traffic between two networks.

Therefore, in the coming years it will be common and perhaps sometimes necessary for portable telecommunications terminals, otherwise known as mobile terminals, to move from one network to another e.g. coverage area or load balancing reasons. Both these scenarios require an indication of the signal quality of the target network to switch to e.g. from 3G (UMTS) to 2G(GSM) or vice versa. The signal quality of the target network should be sufficiently good to maintain the signal quality so that the Quality of Service (QoS) is maintained. The mobile terminal transceiver needs to obtain synchronisation with the target network before the handover from the current network to the target network takes place. Single transceiver chain mobile terminals that will be able to switch from one network to another have been proposed. In order to check the quality of the target network, communication with the present network must be momentarily stopped. This causes degradation of the communication with the present network and this may be noticed by reduction in the quality of the sound in the case of a voice call. Various techniques are used to make the switch as smooth as possible, but these techniques can be complex and result in an increase in the cost of the mobile terminal. Mobile terminals with a plurality of transceiver chains where each transceiver chain will be used independently for each network have been proposed to try and over come the problems associated with single transceiver chain mobile terminals. Ideally, simultaneous communication with different networks should be possible without degradation of the quality of the communication with the present network as each transceiver chain works independently with its respective network. This results in the reduction of the complexity of the techniques involved in switching between different networks and hence a reduction of cost. However, in practice interference and coupling can occur between different transceivers especially when the frequency bands of the different networks are close and communication with one network may have to be momentarily stopped in order to check the quality of the target network. Similar techniques to those used in single transceiver chain terminals may then be required to improve the quality of the communication with the present network.

As an example of how this may be done and the problems that can be encountered we will consider mobile terminals operating with 2G and 3G networks. A mobile terminal that can operate with two networks such as 2G and 3G is called a dual mode terminal.

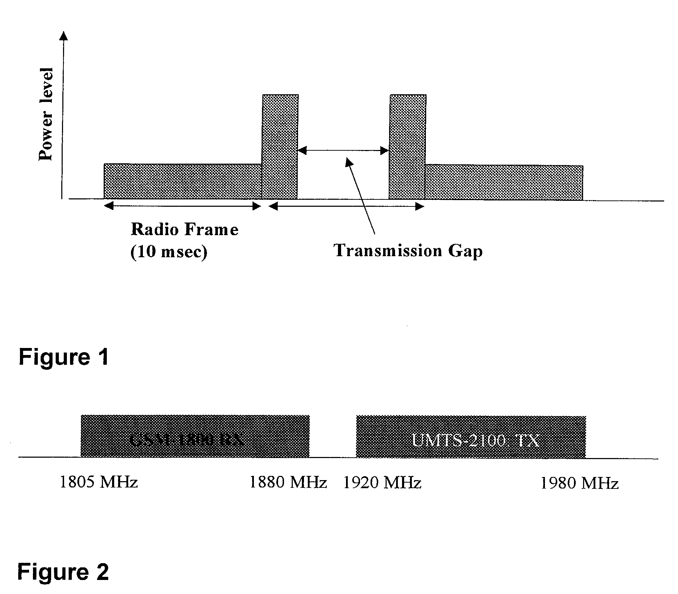

Assume the scenario of a dual mode mobile terminal using a 3G network operating at transmission frequencies around 2100MHz. Also assume that the 2G system operates at 1800 MHz frequency. Since the 2G frequency is close to the 3G transmitting frequency, interference will appear in the 2G reception if the dual mode terminal transmitting a 3G signal. As was mentioned before the dual mode terminal needs to perform measurements on the 2G system in order to be able to evaluate the signal quality and inform the 3G network of the 2G signal quality for the case of a handover need. Due to the fact that the two frequencies are close, the terminal has to stop receiving and transmitting to the 3G network for a period of time, in order for the terminal to perform measurements on a 2G network. During this time period signal quality measurements can be made in the 2G network. After the expiration of this time period the mobile is switched back to the 3 G network. The scheme used in dual mode terminals utilising 3G and 2G networks where the mobile stops listening to the current network for a period of time in order to perform signal quality measurements of the target network is known as compress mode (please refer to Figure 1 for an example of compress mode type). Compress mode can be applied separately for Uplink, UL and for Downlink, DL. The compress mode described in the above example is in the UL direction only. Compress mode operation has been specified in the 3gpp standards in detail. There are different types of compress mode specified. It is out of the scope of this invention to describe these types of compress mode in detail.

The use of compress mode method is obviously necessary for single transceiver chain terminals since there is only one receiver-transmitter chain in this terminal. In dual transceiver chain terminals, there are two transceiver chains, one for each network. However, as shown in figure 2, the GSM-1800 Rx band is close to the UMTS-2100 Tx band and therefore it is possible to have noise and coupling between the two antennas during GSM reception due to the UMTS transmission. So it is necessary to apply compress mode in the UMTS UL when performing DL measurements in the GSM network at 1800 MHz.

As it was mentioned before there are different types of compress mode such as compress mode by spreading factor reduction. With this type of compress mode the transmitter stops transmitting for a number of slots and before and after the transmission gap it transmits with lower spreading factor or higher bit rate in order to keep the total bit rate same as the Quality of Service (QoS) requirements of the network (please refer to Figure 1). In the following some of the disadvantages of this scheme are given:

By using this method the interference to the current signal is increased after and before the transmission gap

During the transmission gap there is no power control running in the current system for this transceiver and therefore the power transmitted after the transmission gap may be higher or lower than the required one. If it is higher the system allocates for this user more bandwidth than the necessary, if it is lower the quality of the connection is degraded.

In the following we will concentrate on the use of compress mode in the UL for dual transceiver chain terminals. The compress mode types that can be used in the UL are the compress mode by spreading factor reduction and the compress mode by higher layer scheduling and compress mode by puncturing. Higher layer scheduling and compress mode by puncturing are rather complicated methods to apply. Moreover, compress mode methods were only finalised very recently in the standards and it may not be possible for all mobile terminals to be able to use them as they are considered too complicated. Furthermore, the development activities are mainly concentrated on allowing the mobile to establish the call and perform some basic functionality, and since compress mode is complicated, it may not be possible for mobile terminals to apply compress mode at first.

### Summary of the Invention

The present invention provides a portable telecommunications terminal having antenna means for receiving and transmitting voice signals and/or data over a mobile telecommunications network, and signal processing means for encoding input voice signals and/or data for transmission and decoding received signals, wherein the terminal has two or more transceiver chains having receiving and transmitting components connected to the antenna means and operating on different frequency bands; and the antenna means includes a dielectric resonator antenna.

The use of a Dielectric Resonator Antenna (DRA) system enables communication to different networks to be carried out simultaneously. For example, target network signal quality checks can be made on a GSM network while communication in a UMTS network continues without the use of compress mode. Since DRAs can provide high isolation between frequencies and reduce the coupling loss between the antennas when operating on frequency bands close i.e. GSM 1800 and UMTS 2100 MHz UL frequency, the measurements will be accurate, due to the reduction of the noise between the frequencies used by different networks.

Dielectric Resonator Antennas are antennas with high radiation efficiency and are a good match to most commonly used transmission lines and they are small in size. The configuration of the majority of the DRAs presented today is that of a slab of dielectric material mounted on a ground plane excited by either an aperature feed in the ground plane or by a probe inserted into the dielectric material. Moreover, there are reports of steerable beam DRAs. Apart from their good matching, small size and efficient radiation, the DRAs can provide a good isolation between frequencies.

In dual transceiver chain terminals, both transceivers will be connected to a DRA. It is proposed to use DRAs in dual transceiver chain terminals to improve the isolation between the signals of different networks, thus reducing the noise and therefore making the use of compress mode redundant.

### Brief Description of the Drawings

An embodiment of the invention will now be described by way of example only and with reference to the accompanying drawings in which:
Figure 1 is a graphical representation of the compress mode method as used in the prior art.
Figure 2 indicates the proximity of the frequencies of the Rx band of GSM and the Tx band of UMTS.
Figure 3 is a block diagram of a portable telecommunications terminal according to the present invention.

### Description of the preferred embodiment of the Invention

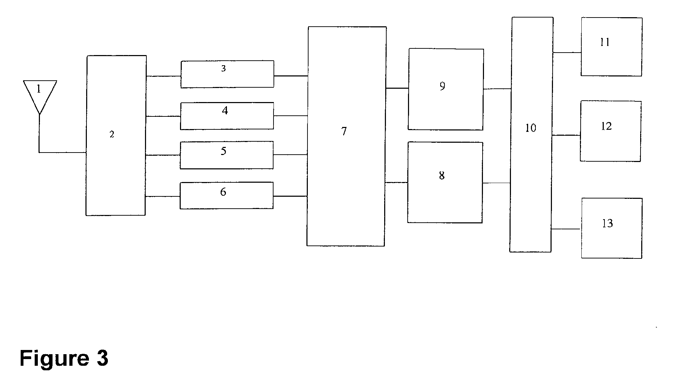

Figure 3 is a block diagram of the preferred embodiment of the present invention. The portable telecommunication terminal of figure 3 preferably includes a microphone 11 and a speaker 12 for respectively inputting and outputting voice signals and a data connection 13 for inputting and outputting data signals. Input voice and data signals are passed on to processing means 10 which readies the input signals for further processing by either GSM signal processing circuitry 9 or UMTS signal processing circuitry 8. Once an input voice and/or data signal has been processed by processing means 10, it is passed onto either the GSM signal processing circuitry 9 or the UMTS signal processing circuitry 8 dependent upon the network which the portable telecommunication terminal is currently using i.e. the network over which the voice/data signal is to be transmitted. In both cases the signal is then passed to the UMTS/GSM system baseband interface circuitry 7 to be readied for the transmitting circuitry of the portable telecommunications terminal. If the portable telecommunications terminal is connected to a GSM network the system baseband will pass the signal to the GSM Tx RF circuitry, 3 and if the portable telecommunication terminal is connected to a UMTS network the system baseband interface circuitry will pass the signal to the UMTS Tx RF circuitry, 5. In both cases the RF signal is then passed to the antenna routing system, 2. Finally the signal is passed to the DRA, 1 for transmission to the network to which the portable telecommunication terminal currently connected.

When a signal is received by the DRA, 1 from the network to which the portable telecommunication terminal is currently connected, the signal is passed through the circuitry of the portable telecommunication terminal in an opposite order to that when transmitting a signal, except that GSM Rx RF circuitry, 4 or UMTS Rx RF circuitry, 6 is used when passing the signal from the antenna routing system, 2 to the UMTS/GSM System Baseband, 7.

The use of a DRA antenna allows the System Baseband to check the quality of the signals exchanged with the network which the portable telecommunication terminal is not using without interrupting communication with the network to which the portable telecommunication terminal is using. Since the terminal has the ability to perform measurements of the target system continuously, it can report the measurements to the network and the network will decide or not to command the switch of the mobile terminal from the current system to the target one.

Various schemes for switching are possible. It may be desirable for a terminal periodically to check the available quality of the "other" network whenever it is switched on. Alternatively such checks may take place only if the quality of the network currently being used deteriorates.

## Claims

1. A portable telecommunications terminal having antenna means for receiving and transmitting voice signals and/or data over a mobile telecommunications network, and signal processing means for encoding input voice signals and/or data for transmission and decoding received signals, wherein the terminal has two or more transceiver chains having receiving and transmitting components connected to the antenna means and operating on different frequency bands; and the antenna means includes a dielectric resonator antenna.

2. A terminal as claimed in claim 1 in which the two or more transceiver chains are operable simultaneously to receive signals transmitted simultaneously over the different frequency bands whilst simultaneously transmitting on a selected one of the frequency bands.

3. A terminal as claimed in claim 2 including measuring means for performing measurements on signals received over the respective frequency bands.

4. A terminal as claimed in claim 3 in which the measuring means is operable to perform measurements on signals received over one of the frequency bands at the same time as the terminal is receiving and transmitting signals over another frequency band.

5. A terminal as claimed in claim 3 or 4 in which the selected frequency band is selected in response to a signal from said measuring means.

6. A terminal as claimed in claim in any preceding claim in which the transceiver chains include a first transceiver chain for transmitting and receiving GSM signals and a second transceiver chain for transmitting and receiving UMTS signals.

7. A terminal as claimed in any preceding claim in including two transceiver chains operable to transmit and receive signals on respective frequency bands spaced apart by 175Mhz or less.
